# EUROPEAN PATENT SPECIFICATION

(11) **EP 2 496 113 B1**
(45) Date of publication and mention of the grant of the patent: **10.05.2023**
(21) Application number: 10784584.4
(22) Date of filing: 01.11.2010
(51) Int. Cl.: A46B 7/06, A46B 9/04, A61C 17/22

(54) **TOOTHBRUSH**
ZAHNBÜRSTE
BROSSE À DENTS

(30) Priority: 02.11.2009 US 257138 P
(43) Date of publication of application: 12.09.2012
(73) Proprietor: Braun GmbH, 61476 Kronberg/Taunus (DE)
(72) Inventor: BAUERNFEIND, Siegfried, 60322 Frankfurt am Main (DE)
(74) Representative: P&G Patent Germany
(86) International application number: PCT/IB2010/054939
(87) International publication number: WO 2011/051920

(56) References cited:
- DE-A1- 19 500 107
- US-A1- 2003 154 568
- US-A1- 2008 184 511

## Description

### FIELD OF THE INVENTION

The present invention pertains to toothbrushes and particularly to toothbrushes having movable elements.

### BACKGROUND OF THE INVENTION

In order to achieve a higher level of cleanliness in the oral cavity, many of the toothbrushes that are currently available on the market offer movable elements. For example, the Pulsar ^{®} toothbrush offers its users pivoting elements while other toothbrushes offer a movable carrier which carries a plurality of bristles. In some instances these movable elements move with respect to a stationary element or a stationary portion of the toothbrush. In other instances, the movable element may move with respect to another movable element. Where the tolerances or gap between the elements generally does not fluctuate, users may not have to be concerned about the device pinching soft tissue within the oral cavity. However, where the tolerances between the elements change, and in particular decrease, there is a possibility that the elements can increase the likelihood of pinching of soft tissue.

US 2008/184511 A1 discloses an oral hygiene implement including a cleaning element carrier and a body. The body has a proximal end and a distal end. The cleaning element carrier has a first area and a second area wherein the second area is disposed inboard of the first area. The first area is attached to the body while the second area is unattached to the body. A bending element is disposed between the first area and the second area, thereby allowing the second area to bend/flex while the first area stays fixed to the body.

As such, there is a need for a toothbrush which is designed to reduce the likelihood of pinching of soft tissue while still offering the benefits of a toothbrush having movable portions.

### SUMMARY OF THE INVENTION

Toothbrushes constructed in accordance with the present invention may include elements which reduced the likelihood of pinching of the soft tissue of a user. Alternatively or in conjunction with such elements, toothbrushes according to the present invention may include elements which reduce the amount of pressure applied to a user's soft tissue if pinching does occur.

A toothbrush according to the present invention comprises a handle, a head, and a neck extending between the handle and the head. The head comprises a first portion and a second portion defining a gap of less than about 3.5 mm between a lower surface of the first portion and a top surface of the second portion. Each of the first portion and the second portion comprising a plurality of cleaning elements. The first portion is flexible with respect to the second portion, and the first portion comprises a first area and a second area defining an opening there between such that the plurality of cleaning elements in the second portion extend through the opening.

### BRIEF DESCRIPTION OF THE DRAWINGS

Figure 1 is a perspective view of a toothbrush constructed in accordance with the present invention showing axes and planes of the toothbrush.
Figure 2 is a side view of a head portion of a toothbrush constructed in accordance with the present invention.
Figure 3 is a cross sectional view of the head portion of the toothbrush shown in Figure 2 from line 3-3.
Figure 4 is the cross sectional view of the head portion of the toothbrush shown in Figure 2 from line 3-3 with the cleaning elements removed.
Figure 5 is the cross sectional view of the head portion of Figure 4 where a first portion overlaps a second portion of the head.
Figure 6 is a cross sectional view showing another embodiment of a head portion constructed in accordance with the present invention.
Figure 7 is a side view showing another embodiment of a head portion constructed in accordance with the present invention.

### DETAILED DESCRIPTION OF THE INVENTION

'Cleaning element carrier" as used herein refers to a structure upon which cleaning elements, massaging elements, and/or any suitable element for use in the oral cavity, etc., may be positioned.

The oral care device of the present invention can reduce the likelihood of the pinching of soft tissue and/or can reduce the level of discomfort associated with pinching of the soft tissue.

The oral care device of the present invention may be implemented in a manual toothbrush or a power toothbrush.

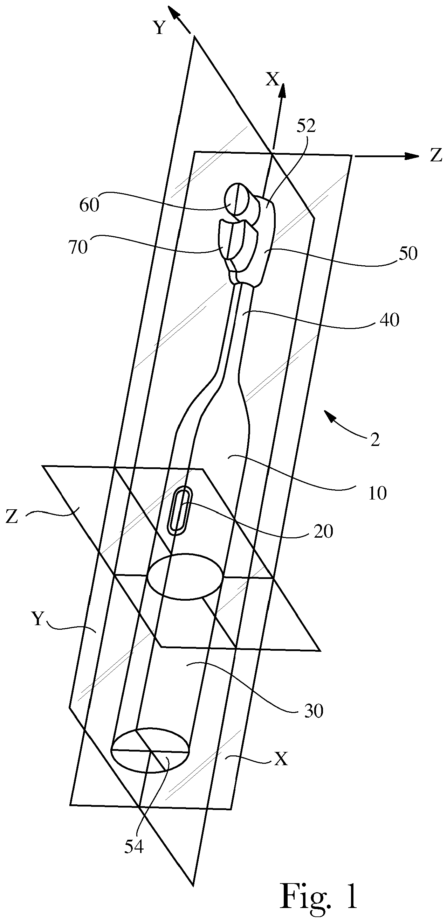

Figure 1 is provided to show the general configuration of toothbrushes constructed in accordance with the present invention. As shown, a toothbrush 2 comprises an elongated body 10 having a handle 30, a head 50, and a neck 40 extending between the handle 30 and the head 50. The head 50 comprises a first cleaning element carrier 60 and in some embodiments, may include additional cleaning element carriers, for example, a second cleaning element carrier 70. The cleaning element carriers 60 and/or 70 are disposed adjacent a distal end 52 of the toothbrush. The distal end 52, as shown, is positioned away from the handle 30. A proximal end 54 of the toothbrush 2 is positioned opposite the distal end 52 away from the head 50 on the handle 30.

An X axis is generally referred to herein as the longitudinal axis and generally extends along a longitudinal or lengthwise dimension (as seen from the top planar view of the toothbrush) of the head 50 or the cleaning element carrier. For example, a longitudinal axis is an axis passing through the longest dimension of the head 50. A Y axis is generally transverse, orthogonal or perpendicular to the X axis and generally bisects the toothbrush head 50 into its top and bottom portions. A Z axis is generally transverse, orthogonal or perpendicular to both the X and Y axes and bisects the head 50 into its left and right halves. For ease of explanation, the X axis will be referred to herein as the longitudinal axis, the Y axis will be referred to as the transverse axis, and the Z axis will be referred to as the lateral axis.

It will be appreciated that axis orientations need not be exactly orthogonal or perpendicular to another axis and that some deviation from 90 degrees between the axes, particularly when these axes are used to describe a direction of motion. It should be understood that any axis orientation herein can be modified by the terms "generalF or "substantially^ (e.g., 'generally transverse" or "substantially transverse^. The word "substantially' implies some angular deviation, but not as much angular deviation from 90 degrees as the word "generally. No modifier indicates slight to no deviation from 90 degrees. Thus, a motion that is described as occurring along a first axis transverse to a second axis implies that the motion occurs at a 90 degree angle to the second axis with some slight deviation permitted (e.g., from manufacturing tolerances, etc.). If the motion is generally transverse or substantially transverse, a greater deviation from 90 degrees is contemplated. All the axes described herein can intersect another axis either generally or substantially transverse to said other axis.

Plane X contains the X axis and is generally referred to herein as the plane of the toothbrush or the plane of the toothbrush head. This plane generally extends along the longitudinal dimension of the toothbrush 2. The Y plane contains the Y axis and extends through the toothbrush 2 and is perpendicular to the X plane. The Y plane either bisects the toothbrush 2 or is parallel to a plane that does. The Z plane is perpendicular to both the X plane and the Y plane and contains the Z axis.

A longitudinal direction is a direction that generally corresponds to a longitudinal or X axis but which may not lie in the same plane as the axis. For example, the longitudinal axes of a shaft and a cleaning element carrier may not extend in the same plane but generally extend in the same direction from a top planar view. Similarly, the neck 40 and head 50 that are angled with respect to each other may not have longitudinal axes that extend in the same plane, but do have axes that extend in the same general longitudinal direction from a top planar view. In this instance, the longitudinal axis of the head typically extends in the same general direction as the longitudinal axes of the toothbrush neck 40. For ease of explanation, the longitudinal axis of the head 30 is generally referred to as the longitudinal axis of the toothbrush. By the phrase "same general direction" some angular deviation is contemplated between the axes.

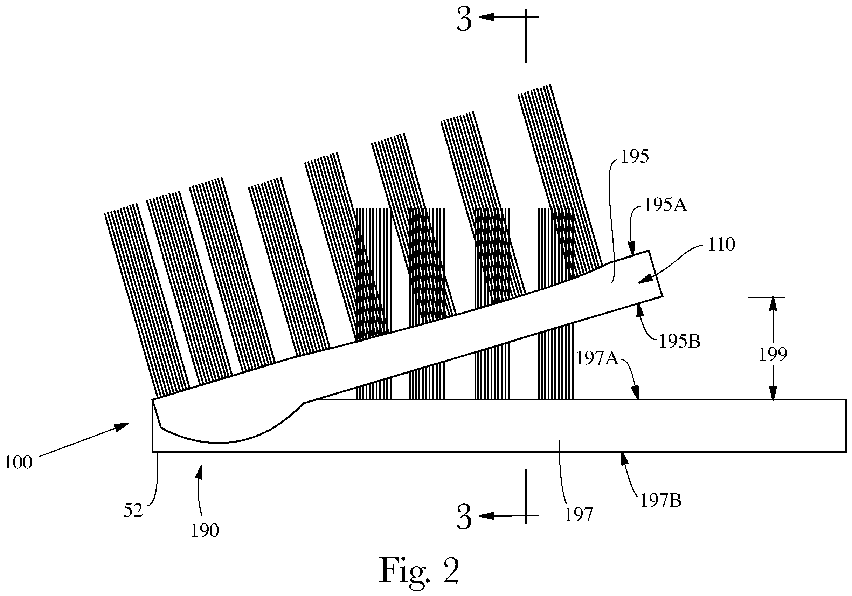

The toothbrush of the present invention may include a variety of cleaning element carriers and cleaning element carrier configurations. In one embodiment, as shown in Figure 2, a toothbrush 100 may comprise a cleaning element carrier 190. The cleaning element carrier 190 may comprise a first portion 195 and a second portion 197. The first portion 195 has an upper surface 195 A and a lower surface 195B. The second portion 197 has an upper surface 197A and a lower surface 197B. Each of the first portion and the second portion comprise cleaning elements. The first portion 195 and the second portion 197 define a gap 199 therebetween. The gap 199 is defined by the maximum distance between the lower surface 195B of the first portion 195 and the upper surface 197A of the second portion 197. As shown, the gap 199 may be in the transverse direction.

In accordance with the present invention, the gap 199 is less than about 3.5 mm between the lower surface 195B of the first portion 195 and an upper surface 197A of the second portion 197. The gap 199, in an unloaded state (non-use), can be less than about 3.0 mm, less than about 2.5 mm, less than about 2.0 mm, less than about 1.5 mm, less than about 1 mm, less than about 0.75 mm, less than about 0.5 mm, less than about 0.45 mm, less than about 0.40 mm, less than about 0.35 mm, less than about 0.30 mm, less than about 0.25 mm, less than about 0.20 mm, less than about 0.15 mm, less than about 0.10 mm, less than about 0.05 mm, less than about 0.01 mm, and/or greater than about 0.01 mm, greater than about 0.05 mm, greater than about 0.1 mm, greater than about 0.25 mm, greater than about 0.30 mm, greater than about 0.5 mm, greater than about 0.75 mm, greater than about 1.0 mm, greater than about 1.5 mm, greater than about 2.0 mm, or greater than about 2.5 mm, or any range or individual value thereof. In accordance with the present invention, the gap 199 is less than about 3.5 mm between the lower surface 195B of the first portion 195 and an upper surface 197A of the second portion 197.

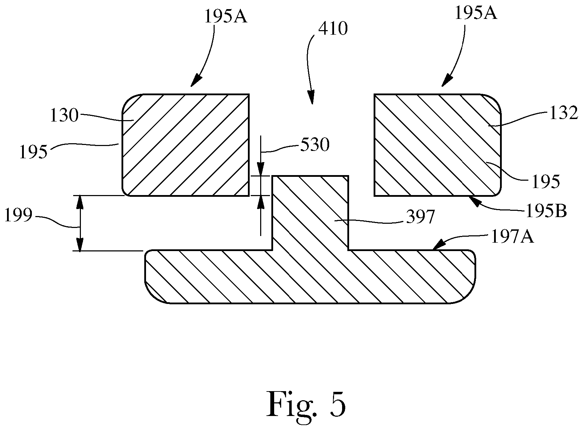

The first portion 195 is flexible with respect to the second portion 197. Reducing the gap 199 may be particularly beneficial where the first portion 195 is flexible with respect to the second portion 197. The gap 199 in an unloaded state (non-use) may be as described above. However, during loading the first portion 195 may flex, bend, rotate, pivot, and/or the like such that the gap 199 becomes smaller. In such instances, soft tissue may, if the gap 199 is not properly designed, enter into the gap 199, and when a load is applied to the toothbrush 100, the gap 199 can be reduced which can then cause discomfort to the user. It is believed that by properly designing the gap 199 between the lower surface 195B of the first portion 195 and the upper surface 197A of the second portion in an unloaded state, the likelihood that soft tissue will enter the gap 199 will be minimized. The gap 199 is further discussed with regard to Figure 5.

As shown, the first portion 195 may be attached to the toothbrush adjacent the distal end 52 (shown in Figure 1). The first portion 195 may extend inboard from the distal end 52 (shown in Figure 1) toward the handle 10 (shown in Figure 1). The first portion 195 may comprise a free end 110 which is an inboard part of the first portion 195. The free end 110 may include the part of the first portion 195 which is unattached to the second portion 197.

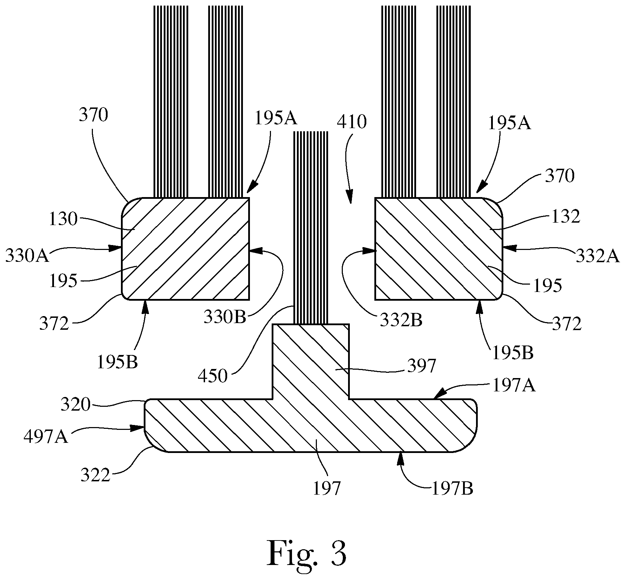

A cross section of the first portion 195 and the second portion 197 is shown in Figure 3. As shown, the first portion 195 includes side surfaces 330A and 332A. At an intersection 370 between the side surface 330A and the upper surface 195A or between side surface 332A and upper surface 195 A generally should be rounded to provide the user comfort during use. However, a radius which is too large may encourage soft tissue to move toward the gap 199 (shown in Figure 2). A radius of the intersection 370 can be less than about 3.5 mm, less than about 3.0 mm, less than about 2.5 mm, less than about 2.0 mm, less than about 1.5 mm, less than about 1.0 mm, less than about 0.5 mm, less than about 0.3 mm, and/or greater than about 0.25 mm, greater than about 0.5 mm, greater than about 0.75 mm, greater than about 1.0 mm, greater than about 1.5 mm, greater than about 2.0 mm, greater than about 2.5 mm, or greater than about 3.0 mm and/or any ranges or individual values thereof. For example, the radius of the intersection may be between about 1.0 mm and 2.0 mm.

In contrast, an intersection 372 between the side surface 330A and the lower surface 195B and/or between the side surface 332A and the lower surface 195B can have a smaller radius to discourage the entrance of soft tissue into the gap 199 (shown in Figure 2). In some embodiments, the radius of the intersection 372 can be less than about 3 mm, less than about 2.5 mm, less than about 2 mm, less than about 1.75 mm, less than about 1.5 mm, less than about 1.25 mm, less than about 1.0 mm, less than about 0.75 mm, less than about 0.50 mm, less than about 0.25 mm, less than about 0.10 mm, less than about 0.05 mm, less than about 0.01 mm, and/or greater than about 0.01 mm, greater than about 0.05 mm, greater than about 0.10 mm, greater than about 0.25 mm, greater than about 0.50 mm, greater than about 0.75 mm, greater than about 1.0 mm, greater than about 1.25 mm, greater than about 1.5 mm, greater than about 1.75 mm, greater than about 2.0 mm, or greater than about 2.5 mm, or any range or individual number thereof. In some embodiments, the intersection 372 can be a right angle between the side surface 330A and the lower surface 195B.

The second portion 197 may include intersections designed in a similar fashion as those of the first portion 195, e.g. 370 and 372. For example, the second portion 197 may comprise a side surface 497 A which extends between the upper surface 197 A and the lower surface 197B. An intersection 320 between the upper surface 197 A and the side surface 497 A may have a radius which is designed similar to that of the intersection 372 between the side surface 330A and the lower surface 195B. In contrast, an intersection 322 between the lower surface 195B and the side surface 497A may have a radius which is designed similar to that of the intersection 370 between the side surface 330A and the upper surface 195A.

Still referring to Figure 3, the first portion 195 comprises a first area 130 and a second area 132. The first area 130 and the second area 132 may support a variety of cleaning elements. Suitable cleaning elements for use in any and all embodiments described herein, such as bristles made of polyamide and or any other suitable material and/or various elastomeric elements, are discussed hereafter.

The first area 130 and the second area 132 define an opening 410 between the first area 130 and the second area 132. The cleaning elements 450 of the second portion 197 extend through the opening 410 between the first area 130 and the second area 132. Additionally, as shown, the second portion 197 may further comprise a protrusion 397 which extends toward the opening 410. The cleaning elements 450 of the second portion 197 may be mounted in the protrusion 397. As shown, the first area 130 and the second area 132 may be separated adjacent the free end 110 (shown in Figure 2), in some embodiments.

The opening 410 may have a width which is the maximum distance between an interior side surface 330B of the first area 130 and an interior side surface 332B of the second part 132. The opening 410 may have a width greater than about 1 mm, greater than about 2 mm, greater than about 3 mm, greater than about 4 mm, greater than about 5 mm, greater than about 6 mm, greater than about 7 mm, greater than about 8 mm, greater than about 9 mm, greater than about 10 mm, greater than about 11 mm, greater than about 12 mm, and/or less than about 12 mm, less than about 11 mm, less than about 10 mm, less than about 9 mm, less than about 8 mm, less than about 5 mm, less than about 4 mm, less than about 3 mm, or less than about 2 mm, or any ranges or individual values thereof.

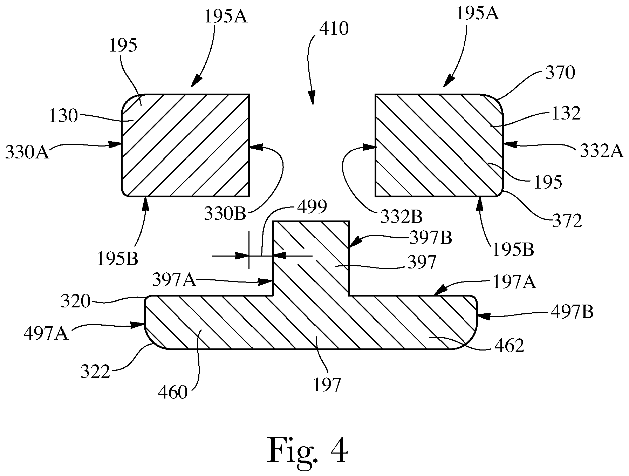

A second gap 499 between the first area 130 and the second portion 197 is shown in Figure 4. For convenience, the cleaning elements of the first area 130, the second area 132, and the second portion 197 have been removed from view. The second gap 499 may be oriented in the lateral direction. The second gap 499 is defined by the largest distance between the interior side surface 330B and an outboard side surface 397A of the protrusion 397 or the largest distance between the interior side surface 332B and an outboard side surface 397B.

The second gap 499 may be designed to reduce the likelihood of pinching by the toothbrush 100. The second gap 499 may be less than about 2.5 mm, less than about 2.0 mm, less than about 1.75 mm, less than about 1.5 mm, less than about 1.25 mm, less than about 1.0 mm, less than about 0.80 mm, less than about 0.5 mm, less than about 0.25 mm, less than about 0.1 mm, less than about 0.05 mm, and/or greater than about 0.05 mm, greater than about 0.1 mm, greater than about 0.25 mm, greater than about 0.50 mm, greater than about 0.75 mm, greater than about 1.0 mm, greater than about 1.25 mm, greater than about 1.50 mm, greater than about 1.75 mm, or greater than about 2.0 mm and/or any ranges or individual values thereof.

A similar gap may be provided between the interior side surface 332B of the second area 132 and the outboard side surface 397B of the protrusion 397. In such embodiments, the second gap 499 should be designed to minimize the likelihood that soft tissue will enter the second gap 499. However, the second gap 499 may also be large enough to allow the protrusion 397 of the second portion 197 to pass between the first area 130 and the second area 132 as needed during brushing. Similar to the gap 199 (shown in Figure 2), a smaller second gap 499 generally equates to a reduced likelihood of pinching of the soft tissue of the user.

Again referring to Figure 4, in some embodiments, the second portion 197 may comprise wings 460 and 462. The wings 460 and 462 may extend laterally outboard from a longitudinal axis of the toothbrush. In such embodiments, the wings 460 and 462 may increase the size of the contact surface between the first portion 195 and the second portion 197. The increased contact surface lowers the pressure applied to the user's soft tissue if pinching does occur. For example, the amount of overlap between the lower surface 195B of the first portion 195 and the upper surface 197 A of the second portion may be a suitable percentage of the lower surface 195B of the first portion 195. In some embodiments, the overlap between the lower surface 195B of the first portion 195 and the upper surface 197A of the second portion 197 may be expressed as a percentage of the overall width of the first portion 195 in the lateral direction. The overlap, in some embodiments, may be greater than about 25 percent, greater than about 50 percent, greater than about 75 percent, greater than about 100 percent, greater than about 125 percent, greater than about 150 percent, greater than about 175 percent, greater than about 200 percent and/or less than about 200 percent, less than about 175 percent, less than about 150 percent, less than about 125 percent, less than about 110 percent, less than about 100 percent, less than about 75 percent, less than about 60 percent, less than about 50 percent, or less than about 40 percent and/or any range or individual number thereof.

In some embodiments, the wing 460 overlaps the first area 130 by greater than about 0.05 mm, greater than about 0.1 mm, greater than about 0.25 mm, greater than about 0.5 mm, greater than about 0.75 mm, greater than about 1.0 mm, greater than about 1.25 mm, greater than about 1.5 mm, greater than about 1.75 mm, greater than about 2.0 mm, greater than about 2.25 mm, greater than about 2.5 mm, greater than about 2.75 mm, greater than about 3.0 mm, greater than about 3.5 mm, greater than about 4.0 mm, greater than about 4.5 mm, greater than about 5 mm, and/or less than about 5 mm, less than about 4.5 mm, less than about 4.0 mm, less than about 3.5 mm, less than about 3.0 mm, less than about 2.5 mm, less than about 2.0 mm, less than about 1.5 mm, less than about 1.0 mm, or any ranges or individual values thereof.

There is a tradeoff with regard to the sizing of the wings 460 and 462. While a larger overlap would help reduce the likelihood of pinching and reduce the pressure applied to soft tissue if pinching occurred, a larger overlap may also hinder brush performance. For example, a larger overlap, e.g. larger wings 460 and 462 may cause some loss of maneuverability of the brush. Because of the increased wing size, the brush head would be larger overall and may cause some discomfort to the user and cause some loss of performance. As such, the overlap
must be evaluated to ensure that a sufficient amount is provided to both reduce pressure applied in pinching situations and to allow maneuverability / comfort to the user.

In some embodiments, the side surface 497 A and a side surface 497B which are between the upper surface 197A and lower surface 197B of the second portion may be disposed laterally inboard of the side edges 330A and/or 332A of the first area 130 and second area 132, respectively. For example, the side surface 497A may be disposed laterally inboard of the side surface 330A by greater than about 0.05 mm, greater than about 0.1 mm, greater than about 0.25 mm, greater than about 0.5 mm, greater than about 0.75 mm, greater than about 1.0 mm, greater than about 1.25 mm, greater than about 1.5 mm, greater than about 1.75 mm, greater than about 2.0 mm, greater than about 2.25 mm, greater than about 2.5 mm, greater than about 2.75 mm, greater than about 3.0 mm, and/or less than about 3.0 mm, less than about 2.75 mm, less than about 2.5 mm, less than about 2.25 mm, less than about 2.0 mm, less than about 1.75 mm, less than about 1.5 mm, less than about 1.25 mm, less than about 1.0 mm, less than bout 0.75 mm, less than about 0.5 mm, less than about 0.25 mm, less than about 0.1 mm, or any ranges or individual value thereof.

In some embodiments, the protrusion 397 may not be required. However, in those embodiments having a protrusion 397, the gap 199 may be configured such that the upper surface 197 A overlaps the lower surface 195B of the first portion 195 as shown in Figure 5. For example, an overlap 530, in an unloaded state, can be greater than about 0.1 mm, greater than about 0.2 mm, greater than about 0.3 mm, greater than about 0.4 mm, greater than about 0.5 mm, greater than about 0.6 mm, greater than about 0.7 mm, greater than about 0.8 mm, greater than about 0.9 mm, greater than about 1.0 mm, greater than about 1.5 mm, greater than about 1.75 mm, greater than about 2.0 mm, greater than about 2.5 mm, greater than about 2.75 mm, greater than about 3.0 mm, greater than about 3.25 mm, greater than about 3.5 mm, greater than about 3.75 mm, greater than about 4.0 mm, greater than about 4.25 mm, greater 4.5 mm, greater 4.75 mm, greater than about 5 mm, and/or less than about 5 mm, less than about 4.75 mm, less than about 4.5 mm, less than about 4.25 mm, less than about 4.0 mm, less than about 3.75 mm, less than about 3.5 mm, less than about 3.25 mm, less than about 3.0 mm, less than about 2.75 mm, less than about 2.5 mm, less than about 2.25 mm, less than about 2.0 mm, less than about 1.75 mm, less than about 1.5 mm, less than about 1.25 mm, less than about 1.0 mm, less than about 0.9 mm, less than about 0.8 mm, less than about 0.7 mm, less than about 0.6 mm, less than about 0.5 mm, less than about 0.4 mm, less than about 0.3 mm, less than about 0.2 mm, or any ranges or individual numbers thereof.

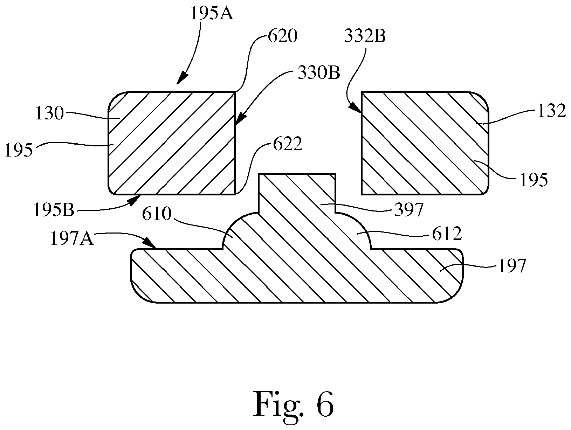

Other pinch reduction / comfort measures may be provided. For example, as shown in Figure 6, the interior side surfaces 330B and 332B and upper surface 195A and lower surface 195B may have appropriately designed intersections. As shown, an intersection 620 between the upper surface 195 A and the interior side surface 330B may be configured to provide comfort to the user. As such, the intersection 620 may have a radius which is similar to the intersection 370 (shown in Figure 3) between the side surface 330A and the upper surface 195A. Similarly, an intersection 622 between the interior side surface 330B and the lower surface 195B may have a radius which is similar to the intersection 372 (shown in Figure 3) between the side surface 330A and the lower surface 195B.

Other measure such as convex areas may be utilized. For example, as shown in Figure 6, the second portion 197 may comprise convex portions 610 and 612 which are positioned laterally outboard of the protrusion 397. The convex portions 610 and 612 can discourage soft tissue from entering the second gap 499 (shown in Figure 4). The convex portions 610, 612 may have any suitable shape. As an example, the convex portions 610, 612 may have a radius of greater than about 0.1 mm, greater than about 0.25 mm, greater than about 0.5 mm, greater than about 0.75 mm, greater than about 1.0 mm, greater than about 1.25 mm, greater than about 1.5 mm, greater than about 1.75 mm, greater than about 2.0 mm, greater than about 2.25 mm, greater than about 2.5 mm, greater than about 2.75 mm, greater than about 3.0 mm, greater than about 3.25 mm, greater than about 3.5 mm, greater than about 3.75 mm, greater than about 4.0 mm and/or less than about 4.0 mm, less than about 3.75 mm, less than about 3.5 mm, less than about 3.25 mm, less than about 3.0 mm, less than about 2.75 mm, less than about 2.5 mm, less than about 2.25 mm, less than about 2.0 mm, less than about 1.75 mm, less than about 1.5 mm, less than about 1.25 mm, less than about 1.0 mm or any ranges or individual values thereof.

For those embodiments including the convex portions 610 and 612, the intersection 622 may be created as a complement to the convex portions 610 and 612. For example, the intersection 622 may have a radius which is similar to that of the intersection 370 (shown in Figure 3). In such embodiments, the radii 622 and that of the convex portions 610, 612 may provide increased contact area such that reduced pressure is experienced by the user if pinching does occur.

Referring back to Figure 2, in some embodiments, particularly where the first portion 195 is attached to the distal end 52 of the toothbrush 100 and the free end 110 which is disposed longitudinally inboard of the distal end 52, the second portion 197 should be sized appropriately. For example, applied brushing pressure to the first portion 195 can induce a moment on the second portion 197. As such, if the second portion 197 is not appropriately designed, the first portion 195 and part of the second portion 197 could break off in the user's mouth.

Using conventional materials for the second portion 197, e.g. polypropylene, the second portion, in some embodiments, should have a cross sectional area of greater than about 10 mm², greater than about 12 mm², greater than about 15 mm², greater than about 18 mm², greater than about 20 mm², greater than about 25 mm², greater than about 30 mm², greater than about 35 mm², greater than about 40 mm², greater than about 45 mm², greater than about 50 mm², greater than about 60 mm², greater than about 65 mm², greater than about 70 mm², and/or less than about 70 mm², less than about 65 mm², less than about 60 mm², less than about 55 mm², less than about 50 mm², less than about 45 mm², less than about 40 mm², less than about 35 mm², less than about 30 mm², less than about 25 mm², less than about 20 mm², less than about 19 mm², less than about 18 mm², less than about 15 mm², less than about 12 mm², less than about 11 mm², or any range or individual value thereof. It is contemplated that for stiff er materials, the cross sectional area may be reduced to some extent.

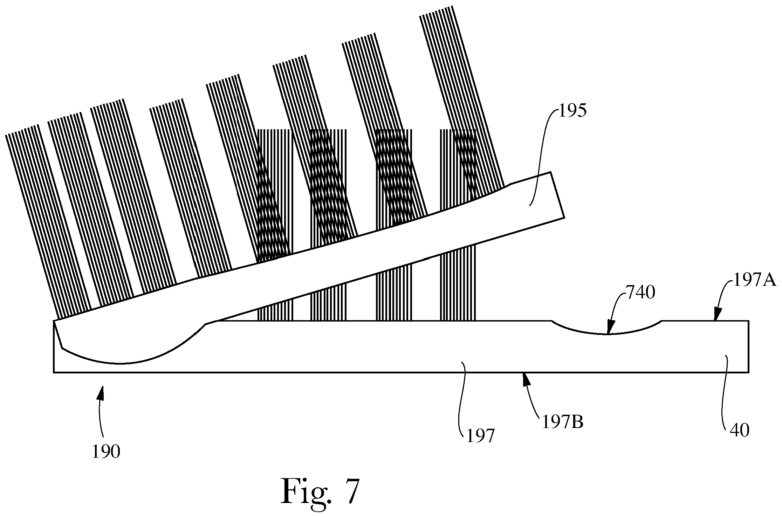

Another feature which may be included in the toothbrush to help reduce the likelihood of breakage of the head is a weakened portion. As shown in Figure 7, the neck 40 and/or the second portion 197 may comprise a recess 740. The recess 740 can be configured such that the stress applied to the second portion 197 during brushing is concentrated in the recess 740. The concentration of the stress in the recess 740 may help prevent breakage. The recess 740 may be filled with elastomer or any other suitable material. Other suitable stress concentrating mechanisms may be utilized. For example, the recess 740 may further comprise cuts, slits, the like, or combinations thereof. Embodiments are contemplated where the cuts, slits, the like, combinations thereof, are utilized independently of the recess 740.

As stated previously, the first portion 195 and the second portion 197 comprise a plurality of cleaning elements. The cleaning elements of the present invention may comprise a wide variety of materials and may have a number of different configurations. Any suitable material and/or any suitable configuration may be utilized. Additionally, it should be noted that the cleaning elements may comprise any suitable cleaning element and/or may comprise elements which are utilized for massaging gums, cleaning the tongue, providing chemistry to an area of the oral cavity, e.g. antimicrobial agents, malodor agents, flavor agents, anti-plaque agents, anti-gingivitis agents, whitening agents, or the like.

For example, in some embodiments, the cleaning elements may comprise tufts. The tufts may comprise a plurality of individual filaments which are securely attached to the first portion 195 and/or second portion 197. Such filaments may be polymeric and may include poly amide or polyester. The longitudinal and cross sectional dimensions of the filaments of the invention and the profile of the filament ends can vary. Additionally, the stiffness, resiliency and shape of the filament end can vary. Some examples of suitable dimensions include a length between about 3 cm to about 6 cm, or any individual number within the range. Additionally, the filaments may include a substantially uniform cross-sectional dimension of between about 100 to about 350 microns, or any individual number within the range. The tips of the filaments may be any suitable shape, examples of which include a smooth tip, a rounded tip, tapered tip, a pointed tip. In some embodiments, the filaments may include a dye which indicates wear of the filaments as described in U.S. Patent No. 4,802,255. Some examples of suitable filaments for use with the brush of the present invention are described in U.S. Patent No. 6,199,242. Other suitable examples of bristles include textured bristles, e.g., single and multicomponent bristles (e.g., bristles formed by coextruding different polymers), crimped bristles, gum massaging bristles, bristles of varying configurations (e.g., bristles having multiple lumens), and/or combinations thereof.

Other suitable examples of cleaning elements include those described in U.S. Patent Application Publication Numbers 2002/0059685; 2005/0000043; 2004/0177462; 2005/0060822; 2004/0154112; U.S. Patent Nos. 6,151,745; 6,058,541 ; 6,041,467; 6,553,604; 6,564,416; 6,826,797; 6,993,804; 6,453,497; 6,993,804; 6,041,467; and U.S.

Patent Application Serial Nos. 12/008,073, filed on January 8, 2008, entitled,'TOOTHBRUSHES' and 60/928,012, filed on May 7, 2007, entitled 'ORAL HYGIENE IMPLEMENTS. Additionally, any suitable arrangement of cleaning elements may be utilized. Some suitable examples include those described in U.S. Patent Nos. 5,836,769; 6,564,416; 6,308,367; 6,108,851; 6,058,541 ; and 5,396,678.

In addition to bristles and/or bristle tufts, the cleaning elements may also include, elastomeric structures, foams, combinations thereof, and the like. For example, the cleaning elements may comprise elastomeric fins as described in U.S. Patent No. 6,553,604 .

Patent Application Publication No. 2007/0251040A1. As yet another example, the cleaning elements may comprise elastomeric cup shaped elements as described in U.S.

Patent Publication No. 2004/0154112A1. In some embodiments, the cleaning elements may comprise a combination of elastomeric elements and bristles. As an example, a combination of fins and bristle may be utilized, a combination of an elastomeric cup(s) and bristles may be utilized, and/or combinations of elastomeric elements either alone or in combination with bristles may be utilized. Combinations of elastomeric cleaning elements are described in U.S. Patent Publication No. 2009/0007357A1.

Additionally, at least a portion of some of the cleaning elements may be attached to the first portion 195 and/or the second portion 197 at an angle to the respective upper surfaces of the first portion 195 and the second portion 197. Such orientations are described in U.S. Patent No. 6,308,367. Also, any suitable method may be utilized to attach the tufts to the first portion 195 and/or the second portion 197. Suitable methods include stapling, hot tufting, anchor free tufting, combinations thereof, and/or the like. The first portion 195 and/or the second portion 197 may be constructed of any suitable material. Some suitable examples of materials which can be utilized to construct the first portion 195 and/or the second portion 197 include a polyethylene (PE), polypropylene (PP), polyethyleneterapthalate (PET), acrylonitrile-butadiene-styrene (ABS), and styreneacrylonitrile (SAN), PP and TPE blends, acetal (POM), nylon (PA), modified polyphenylene oxid (PPO), polyester (PBT), polycarbonate (PC), high impact polystyrene (HIPS), isoplast, (TPE) thermo plastic elastomers, and the like, and suitable combinations thereof.

The present invention may be utilized in manual toothbrushes where the cleaning motion is supplied completely by a user. However, embodiments are contemplated where the present invention comprises a manual toothbrush which supplements the use s motions with a vibration device as described in U.S. Patent Application Publication No. 2003/0162145. Moreover, embodiments are contemplated where the present invention includes a power toothbrush. A power toothbrush is one where the toothbrush provides the majority of the cleaning motion. The user may manipulate the power toothbrush to ensure that the power toothbrush contacts the desired oral surfaces. In such embodiments, the cleaning elements, the first portion 195 and/or the second portion 197 may be driven in a variety of motions. Some examples of such suitable motions are described in U.S. Patent Application Publication No. 2003/0084527. Also,
embodiments are contemplated where the present invention includes a replaceable brush head for a power and/or a manual toothbrush.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as"40 mm" is intended to mean "about 40 mm:'

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

The preceding text sets forth a broad description of numerous different embodiments of the present invention. The description is to be construed as exemplary only and does not describe every possible embodiment since describing every possible embodiment would be impractical, if not impossible, and it will be understood that any feature, characteristic, component, composition, ingredient, product, step or methodology described herein can be combined with or substituted for, in whole or part, any other feature, characteristic, component, composition, ingredient product, step or methodology described herein. Numerous alternative embodiments could be implemented, using either current technology or technology developed after the filing date of this patent, which would still fall within the scope of the claims.

## Claims

1. A toothbrush comprising a handle (30), a head (50), and a neck (40) extending between the handle (30) and the head (50), **characterized in that** the head (50) comprises:
a first portion (195) and a second portion (197) defining a gap (199) of less than about 3.5 mm between a lower surface (195B) of the first portion (195) and an upper surface (197A) of the second portion (197), each of the first portion (195) and the second portion (197) comprise a plurality of cleaning elements, wherein . the first portion (195) is flexible with respect to the second portion (197), and the first portion (195) comprises a first area (130) and a second area (132) defining an opening (410) there between such that the plurality of cleaning elements in the second portion (197) extend through the opening (410).

2. The toothbrush of claim 1, wherein the first portion (195) comprises an upper surface (195A) and side surface (330A, 332A), the side surface extending between the upper surface (195A) and the lower surface (195B), and in that an intersection (370) between the side surface (330A, 332A) and the lower surface (195B) has a radius of less than 2.5 mm.

3. The toothbrush of any of the preceding claims, wherein the gap (199) between the first portion (195) and the second portion (197) is in an axial direction.

4. The toothbrush of any of the preceding claims, wherein the first area (130) and the second portion (197) define a second gap (499) in the transverse direction, and in that the second gap (499) is less than 1.5 mm.

5. The toothbrush of claim 4, wherein the second gap (499) is less than 0.8 mm.

6. The toothbrush of any of the preceding claims, wherein the gap (199) is less than 0.3 mm.

7. The toothbrush of any of the preceding claims, wherein the second portion (132) comprises wings (460, 462) such that the lower surface (195B) of the first portion (195) and the upper surface (197 A) of the second portion (197) overlap by at least 25 percent.

8. The toothbrush of any of the preceding claims, wherein the first area (130) comprises the upper surface (195A) and an interior side surface (330B, 332B), the interior side surface (330B, 332B) extending between the lower surface (195B) and the upper surface (195A), the interior side surface (330B, 332B) being disposed adjacent the second portion (197), and wherein an intersection (622) between the interior side surface (330B, 332B) and the lower surface (195B) has a radius of greater than 0.05 mm.

9. The toothbrush of any of the preceding claims, wherein the first area (130) and the second area (132) are attached to the toothbrush adjacent a distal end (52) of the toothbrush, the distal end (52) being furthest from the handle (30), the first area (130) and the second area (132) having free ends (110) which are disposed inboard of the distal end (52), the opening (410) between the first area (130) and the second area (132) being less than 10 mm.

10. The toothbrush of any of the preceding claims, wherein the first area (130) and the second portion (197) overlap each other by at least 0.05 mm.

11. A toothbrush according to any of the preceding claims, wherein the first portion (195) is attached to the toothbrush at a distal end (52) of the toothbrush, the distal end (52) being furthest from the handle (30), and the first portion (195) comprises a free end (110) disposed inboard of the distal end (52), the free end (110) being unattached to the toothbrush, and the second portion (197) having a cross sectional area of between 10 mm² to about 75 mm².

12. A toothbrush according to any of the preceding claims, wherein the first portion (195) comprises a first area (130) and a second area (132) having an opening (410) therebetween, the first area (130) having an interior side surface (330B), the second portion (197) comprising a protrusion (397) having side surfaces (397A, 397B), the side surface (397 A) overlapping the interior side surface (330B) by greater than 0.1 mm.

13. A toothbrush according to any of the preceding claims, wherein the first portion (195) comprises a first area (130) and a second area (132) having an opening (410) therebetween, the first area (130) having an interior side surface (330B), the second portion (197) comprising a protrusion (397) having side surfaces (397A, 397B), the side surface (397 A) being spaced from the interior side surface (330B) by a second gap (499) which is less than 1.5 mm, and in that the protrusion (397) comprises convex portions (610, 612) positioned laterally outboard of the protrusion (397).

## Patentansprüche

1. Zahnbürste, umfassend einen Griff (30), ein Kopfstück (50) und einen Hals (40), der sich zwischen dem Griff (30) und dem Kopfstück (50) erstreckt, **dadurch gekennzeichnet, dass** das Kopfstück (50) umfasst:
einen ersten Abschnitt (195) und einen zweiten Abschnitt (197), die einen Spalt (199) von weniger als etwa 3,5 mm zwischen einer unteren Oberfläche (195B) des ersten Abschnitts (195) und einer oberen Oberfläche (197A) des zweiten Abschnitts (197) bestimmen, wobei jeder des ersten Abschnitts (195) und des zweiten Abschnitts (197) eine Vielzahl von Reinigungselementen umfasst, wobei der erste Abschnitt (195) in Bezug auf den zweiten Abschnitt (197) elastisch ist und der erste Abschnitt (195) einen ersten Bereich (130) und einen zweiten Bereich (132) umfasst, die eine Öffnung (410) dazwischen bestimmen, derart, dass sich die Vielzahl von Reinigungselementen in dem zweiten Abschnitt (197) durch die Öffnung (410) erstreckt.

2. Zahnbürste nach Anspruch 1, wobei der erste Abschnitt (195) eine obere Oberfläche (195A) und eine seitliche Oberfläche (330A, 332A) umfasst, wobei sich die seitliche Oberfläche zwischen der oberen Oberfläche (195A) und der unteren Oberfläche (195B) erstreckt, und dass ein Schnittpunkt (370) zwischen der seitlichen Oberfläche (330A, 332A) und der unteren Oberfläche (195B) einen Radius von weniger als 2,5 mm aufweist.

3. Zahnbürste nach einem der vorstehenden Ansprüche, wobei der Spalt (199) zwischen dem ersten Abschnitt (195) und dem zweiten Abschnitt (197) in einer axialen Richtung ist.

4. Zahnbürste nach einem der vorstehenden Ansprüche, wobei der erste Bereich (130) und der zweite Abschnitt (197) einen zweiten Spalt (499) in der Querrichtung bestimmen, und dass der zweite Spalt (499) kleiner als 1,5 mm ist.

5. Zahnbürste nach Anspruch 4, wobei der zweite Spalt (499) kleiner als 0,8 mm ist.

6. Verfahren nach einem der vorstehenden Ansprüche, wobei der Spalt (199) kleiner als 0,3 mm ist.

7. Zahnbürste nach einem der vorstehenden Ansprüche, wobei der zweite Abschnitt (132) Flügel (460, 462) umfasst, derart, dass sich die untere Oberfläche (195B) des ersten Abschnitts (195) und die obere Oberfläche (197A) des zweiten Abschnitts (197) um mindestens 25 Prozent überlappen.

8. Zahnbürste nach einem der vorstehenden Ansprüche, wobei der erste Bereich (130) die obere Oberfläche (195A) und eine innere seitliche Oberfläche (330B, 332B) umfasst, wobei sich die innere seitliche Oberfläche (330B, 332B) zwischen der unteren Oberfläche (195B) und der oberen Oberfläche (195A) erstreckt, wobei die innere seitliche Oberfläche (330B, 332B) benachbart an dem zweiten Abschnitt (197) positioniert ist, und wobei ein Schnittpunkt (622) zwischen der inneren seitlichen Oberfläche (330B, 332B) und der unteren Oberfläche (195B) einen Radius von über 0,05 mm aufweist.

9. Zahnbürste nach einem der vorstehenden Ansprüche, wobei der erste Bereich (130) und der zweite Bereich (132) benachbart an ein distales Ende (52) der Zahnbürste an der Zahnbürste angebracht sind, wobei das distale Ende (52) am weitesten von dem Griff (30), entfernt ist, wobei der erste Bereich (130) und der zweite Bereich (132) freie Enden (110) aufweisen, die innerhalb des distalen Endes (52) positioniert sind, wobei die Öffnung (410) zwischen dem ersten Bereich (130) und dem zweiten Bereich (132) kleiner als 10 mm ist.

10. Zahnbürste nach einem der vorstehenden Ansprüche, wobei der erste Bereich (130) und der zweite Abschnitt (197) einander um mindestens 0,05 mm überlappen.

11. Zahnbürste nach einem der vorstehenden Ansprüche, wobei der erste Abschnitt (195) an einem distalen Ende (52) der Zahnbürste an der Zahnbürste angebracht ist, wobei das distale Ende (52) am weitesten von dem Griff (30) entfernt ist, und wobei der erste Abschnitt (195) ein freies Ende (110) umfasst, das innerhalb des distalen Endes (52) positioniert ist, wobei das freie Ende (110) nicht an der Zahnbürste angebracht ist, und der zweite Abschnitt (197) einen Querschnittsbereich von zwischen 10 mm² bis etwa 75 mm² aufweist.

12. Zahnbürste nach einem der vorstehenden Ansprüche, wobei der erste Abschnitt (195) einen ersten Bereich (130) und einen zweiten Bereich (132) umfasst, die eine Öffnung (410) dazwischen aufweisen, wobei der erste Bereich (130) eine innere seitliche Oberfläche (330B) aufweist, der zweite Abschnitt (197) umfassend einen Vorsprung (397), der seitliche Oberflächen (397A, 397B) aufweist, wobei die seitliche Oberfläche (397A) die innere seitliche Oberfläche (330B) um über 0,1 mm überlappt.

13. Zahnbürste nach einem der vorstehenden Ansprüche, wobei der erste Abschnitt (195) einen ersten Bereich (130) und einen zweiten Bereich (132) umfasst, die eine Öffnung (410) dazwischen aufweisen, wobei der erste Bereich (130) eine innere seitliche Oberfläche (330B) aufweist, der zweite Abschnitt (197) umfassend einen Vorsprung (397), der seitliche Oberflächen (397A, 397B) aufweist, wobei die seitliche Oberfläche (397A) von der inneren seitlichen Oberfläche (330B) durch einen zweiten Spalt (499) beabstandet ist, der kleiner als 1,5 mm ist, und dass der Vorsprung (397) konvexe Abschnitte (610, 612) umfasst, die lateral außerhalb des Vorsprungs (397) angeordnet sind.

## Revendications

1. Brosse à dents comprenant un manche (30), une tête (50), et un col (40) s'étendant entre le manche (30) et la tête (50), **caractérisée en ce que** la tête (50) comprend :
une première partie (195) et une seconde partie (197) définissant un espace (199) inférieur à environ 3,5 mm entre une surface inférieure (195B) de la première partie (195) et une surface supérieure (197A) de la seconde partie (197), chacune de la première partie (195) et de la seconde partie (197) comprennent une pluralité d'éléments de nettoyage, dans laquelle la première partie (195) est flexible par rapport à la seconde partie (197), et la première partie (195) comprend une première zone (130) et une seconde zone (132) définissant une ouverture (410) entre elles de telle sorte que la pluralité d'éléments de nettoyage dans la seconde partie (197) s'étendent à travers l'ouverture (410).

2. Brosse à dents selon revendication 1, dans laquelle la première partie (195) comprend une surface supérieure (195A) et une surface latérale (330A, 332A), la surface latérale s'étendant entre la surface supérieure (195A) et la surface inférieure (195B), et en ce qu'une intersection (370) entre la surface latérale (330A, 332A) et la surface inférieure (195B) a un rayon inférieur à 2,5 mm.

3. Brosse à dents selon l'une quelconque des revendications précédentes, dans laquelle l'espace (199) entre la première partie (195) et la seconde partie (197) est dans une direction axiale.

4. Brosse à dents selon l'une quelconque des revendications précédentes, dans laquelle la première zone (130) et la seconde partie (197) définissent un second espace (499) dans la direction transversale, et en ce que le second espace (499) est inférieur à 1,5 mm.

5. Brosse à dents selon la revendication 4, dans laquelle le second espace (499) est inférieur à 0,8 mm.

6. Brosse à dents selon l'une quelconque des revendications précédentes, dans laquelle l'espace (199) est inférieur à 0,3 mm.

7. Brosse à dents selon l'une quelconque des revendications précédentes, dans laquelle la seconde partie (132) comprend des ailettes (460, 462) de telle sorte que la surface inférieure (195B) de la première partie (195) et la surface supérieure (197A) de la seconde partie (197) se chevauchent sur au moins 25 pour cent.

8. Brosse à dents selon l'une quelconque des revendications précédentes, dans laquelle la première zone (130) comprend la surface supérieure (195A) et une surface latérale intérieure (330B, 332B), la surface latérale intérieure (330B, 332B) s'étendant entre la surface inférieure (195B) et la surface supérieure (195A), la surface latérale intérieure (330B, 332B) étant disposée adjacente à la seconde partie (197), et dans laquelle une intersection (622) entre la surface latérale intérieure (330B, 332B) et la surface inférieure (195B) a un rayon supérieur à 0,05 mm.

9. Brosse à dents selon l'une quelconque des revendications précédentes, dans laquelle la première zone (130) et la seconde zone (132) sont fixées à la brosse à dents adjacentes à une extrémité distale (52) de la brosse à dents, l'extrémité distale (52) étant la plus éloignée du manche (30), la première zone (130) et la seconde zone (132) ayant des extrémités libres (110) qui sont disposées à l'intérieur de l'extrémité distale (52), l'ouverture (410) entre la première zone (130) et la seconde zone (132) étant inférieure à 10 mm.

10. Brosse à dents selon l'une quelconque des revendications précédentes, dans laquelle la première zone (130) et la seconde partie (197) se chevauchent l'une l'autre sur au moins 0,05 mm.

11. Brosse à dents selon l'une quelconque des revendications précédentes, dans laquelle la première partie (195) est fixée à la brosse à dents au niveau d'une extrémité distale (52) de la brosse à dents, l'extrémité distale (52) étant la plus éloignée du manche (30), et la première partie (195) comprend une extrémité libre (110) disposée à l'intérieur de l'extrémité distale (52), l'extrémité libre (110) étant non fixée à la brosse à dents, et la seconde partie (197) ayant une aire en coupe transversale comprise entre 10 mm² et environ 75 mm².

12. Brosse à dents selon l'une quelconque des revendications précédentes, dans laquelle la première partie (195) comprend une première zone (130) et une seconde zone (132) ayant une ouverture (410) entre elles, la première zone (130) ayant une surface latérale intérieure (330B), la seconde partie (197) comprenant une saillie (397) ayant des surfaces latérales (397A, 397B), la surface latérale (397A) chevauchant la surface latérale intérieure (330B) sur plus de 0,1 mm.

13. Brosse à dents selon l'une quelconque des revendications précédentes, dans laquelle la première partie (195) comprend une première zone (130) et une seconde zone (132) ayant une ouverture (410) entre elles, la première zone (130) ayant une surface latérale intérieure (330B), la seconde partie (197) comprenant une saillie (397) ayant des surfaces latérales (397A, 397B), la surface latérale (397A) étant espacée de la surface latérale intérieure (330B) par un second espace (499) qui est inférieur à 1,5 mm, et en ce que la saillie (397) comprend des parties convexes (610, 612) positionnées latéralement à l'extérieur de la saillie (397).
